(19) Europäisches Patentamt
European Patent Office
Office européen des brevets

(11) EP 0 722 986 B1

(12) **EUROPÄISCHE PATENTSCHRIFT**

(45) Veröffentlichungstag und Bekanntmachung des Hinweises auf die Patenterteilung:
**19.04.2000 Patentblatt 2000/16**

(51) Int Cl.[7]: **C08L 77/00**, C08G 69/26

(21) Anmeldenummer: **96100507.1**

(22) Anmeldetag: **16.01.1996**

# (54) Thermoplastische Polyamidformmassen

Thermoplastic polyamid compositions

Compositions de polyamides thermoplastiques

(84) Benannte Vertragsstaaten:
**BE CH DE FR GR LI NL**

(30) Priorität: **24.01.1995 DE 19501998**

(43) Veröffentlichungstag der Anmeldung:
**24.07.1996 Patentblatt 1996/30**

(73) Patentinhaber: **BASF AKTIENGESELLSCHAFT**
**67056 Ludwigshafen (DE)**

(72) Erfinder:
- **Gottschalk, Axel, Dr.**
  **D-67435 Neustadt (DE)**
- **Fisch, Herbert, Dr.**
  **D-67157 Wachenheim (DE)**
- **Pipper, Gunter**
  **D-67098 Bad Dürkheim (DE)**
- **Weber, Martin, Dr.**
  **D-67433 Neustadt (DE)**

(56) Entgegenhaltungen:
**EP-A- 0 345 486**
**EP-A- 0 519 248**
**EP-A- 0 667 367**
**DE-A- 1 933 395**
**DE-A- 3 403 576**
**GB-A- 2 194 540**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 722 986 B1

## Beschreibung

Die Erfindung betrifft thermoplastische Formmassen, enthaltend

A) 5 bis 94 Gew.-% eines teilaromatischen, teilkristallinen Copolyamids, aufgebaut im wesentlichen aus

$a_1$) 30 bis 44 mol-% Einheiten, welche sich von Terephthalsäure ableiten

$a_2$) 6 bis 20 mol-% Einheiten, welche sich von Isophthalsäure ableiten

$a_3$) 43 bis 49,5 mol-% Einheiten, welche sich von Hexamethylendiamin ableiten

$a_4$) 0,5 bis 7 mol-% Einheiten, welche sich von aliphatischen cyclischen Diaminen mit 6 bis 30 C-Atomen ableiten,

wobei die Molprozente der Komponenten $a_1$) bis $a_4$) zusammen 100 % ergeben und

B) 5 bis 94 Gew.-% eines nicht funktionalisierten ASA- oder ABS- oder SAN-Polymeren oder Polymeren aus $C_1$ bis $C_{18}$-Alkylestern der (Meth)acrylsäure oder deren Mischungen

C) 1 bis 30 Gew.-% eines Polymerisates aufgebaut auf Basis eines ASA- oder ABS- oder SAN-Polymeren oder Polymeren aus $C_1$ bis $C_{18}$ Alkylestern der (Meth)acrylsäure oder deren Mischungen, modifiziert durch Einbau eines Monomeren mit mindestens einer Carboxyl-, Carbonsäure-, Säureanhydrid-, Säureamid-, Säureimid-, Carbonsäureester-, Carboxylat-, Amino-, Hydroxyl-, Epoxy-, Oxazolin-, Urethan-, Harnstoff-, Lactam-, Halogenbenzyl- oder 1,2,4-Triazolin-3,5-dion-Gruppe in Mengen von 0,1 bis 10 Gew.-%, bezogen auf 100 Gew.-% (C),

D) 0 bis 30 Gew.-% eines kautschukelastischen Polymerisates, welches nicht der für B) und C) angegebenen Definition entspricht

E) 0 bis 45 Gew.-% eines faser- oder teilchenförmigen Füllstoffes oder deren Mischungen

F) 0 bis 30 Gew.-% üblicher Zusatzstoffe und Verarbeitungshilfsmittel,

wobei sich die Prozentzahlen A) bis F) zu 100 % ergänzen.

Außerdem betrifft die Erfindung die Verwendung der thermoplastischen Formmassen zur Herstellung von Fasern, Folien und Formkörpern sowie die hierbei erhältlichen Formkörper.

Mischungen aus Polyamiden mit SAN-, ABS- oder ASA-Polymeren sind allgemein bekannt. Im allgemeinen wird ABS als Zähmodifier in Polyamid eingearbeitet wie u.a. in der EP-A 3126, DE-A 34 03 576, EP-A 322 558, EP-A 411 823 und EP-A 1245 beschrieben.

ABS-, ASA-, SAN- oder PMMA-Polymere sind jedoch mit Polyamid nicht verträglich, so daß eine unzureichende Phasenanbindung (Haftung zwischen den einzelnen Polymerphasen) vorliegt, die bei der Verarbeitung oft zur Entmischung der Polymeren führt.

Um eine bessere Phasenanbindung zu erzielen, ist es weiterhin bekannt eines der beiden Polymeren zu modifizieren, d.h. funktionelle Monomere durch Copolymerisation oder Pfropfung in die Polymerkette einzuführen. Diese Gruppen können bei der Verarbeitung der Mischungen mit dem jeweils anderen Polymeren reagieren und die Phasenhaftung verbessern:

Die JP-A 041/126 757 und WO-A 89/1962 beschreiben mit Carbonsäuregruppen modifiziertes ABS und Polyamid, gegebenenfalls in Gegenwart eines Radikalstarters hergestellt, die US-A 4,496,690 offenbart ABS modifiziert mit Acrylamid in Mischung mit Polyamiden, US-A 5,032,644 isocyanatgruppenhaltige Styrole zur Modifizierung des ABS für Polyamidblends, US-A 5,132,370 (N-Phenyl)maleinimidhaltiges ABS für Polyamidblends. Die US 3,796,771 beschreibt mit sauren Gruppen modifizierte Polyamide in Mischung mit ABS.

Die Mischungen aus ABS/Polyamid, welche aus dem Stand der Technik bekannt sind, sind jedoch noch verbesserungswürdig im Hinblick auf die Phasenanbindung und die mechanischen Eigenschaften der Formkörper.

Insbesondere bei komplizierten Geometrien von Formkörpern ist die Bindenahtfestigkeit unbefriedigend. Diese sog. Bindenähte entstehen an den Grenzflächen der Polymerschmelzen, welche bei komplexen räumlichen Ausgestaltungen der Spritzgußform an verschiedenen Stellen der Form eingespritzt werden müssen, um das Formteil vollständig zu füllen.

Aufgabe der vorliegenden Erfindung war es daher, thermoplastische Formmassen auf der Basis von Polyamiden und ABS-, SAN-, ASA- oder (Meth)acrylat-Polymeren zur Verfügung zu stellen, die eine gute Bindenahtfestigkeit neben einer guten Zähigkeit (insbesondere multiaxiale Schlagzähigkeit) aufweisen.

Diese Aufgabe wird erfindungsgemäß durch die eingangs definierten thermoplastischen Formmassen gelöst. Bevorzugte Massen dieser Art sind den Unteransprüchen zu entnehmen.

Als Komponente A) enthalten die erfindungsgemäßen Formmassen ein teilaromatisches teilkristallines Copolyamid, in Mengen von 5 bis 94, vorzugsweise 10 bis 95 und insbesondere 20 bis 80 Gew.-%, aufgebaut aus

$a_1$) 30 bis 44, vorzugsweise 32 bis 40 und insbesondere 32 bis 38 mol-% Einheiten, welche sich von Terephthalsäure ableiten,

$a_2$) 6 bis 20, vorzugsweise 10 bis 18 und insbesondere 12 bis 18 mol-% Einheiten, welche sich von Isophthalsäure ableiten,

$a_3$) 43 bis 49,5, vorzugsweise 46 bis 48,5 und insbesondere 46,3 bis 48,2 mol-% Einheiten, welche sich von Hexamethylendiamin ableiten,

$a_4$) 0,5 bis 7, vorzugsweise 1,5 bis 4 und insbesondere 1,8 bis 3,7 mol-% Einheiten, welche sich von aliphatischen cyclischen Diaminen mit 6 bis 30, vorzugsweise 13 bis 29 und insbesondere 13 bis 17 C-Atomen ableiten,

wobei die Molprozente der Komponenten $a_1$) bis $a_4$) zusammen 100 % ergeben.

Die Diamineinheiten $a_3$) und $a_4$) werden vorzugsweise äquimolar mit den Dicarbonsäureeinheiten $a_1$) und $a_2$) umgesetzt.

Geeignete Monomere $a_4$) sind vorzugsweise cyclische Diamine der Formel

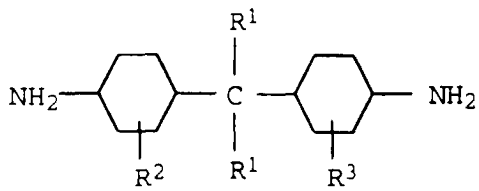

in der

$R^1$ Wasserstoff oder eine $C_1$-$C_4$-Alkylgruppe,
$R^2$ eine $C_1$-$C_4$-Alkylgruppe oder Wasserstoff und
$R^3$ eine $C_1$-$C_4$-Alkylgruppe oder Wasserstoff bedeutet.

Besonders bevorzugte Diamine $a_4$) sind Bis(4-aminocyclohexyl)methan, Bis(4-amino-3-methylcyclohexyl)methan, Bis(4-aminocyclohexyl)-2,2-propan und Bis(4-amino-3-methylcyclohexyl)-2,2-propan.

Als weitere Monomere $a_4$) seien 1,3- und 1,4-Cyclohexandiamin und Isophorondiamin genannt.

Neben den vorstehend beschriebenen Einheiten $a_1$) bis $a_4$) können die teilaromatischen Copolyamide A) bis zu 4, vorzugsweise bis zu 3,5 Gew.-% (bezogen auf 100 Gew.-% A) Einheiten weiterer polyamidbildender Monomeren $a_5$) enthalten, wie sie von anderen Polyamiden bekannt sind.

Aromatische Dicarbonsäuren $a_5$) weisen 8 bis 16 Kohlenstoffatome auf. Geeignete aromatische Dicarbonsäuren sind beispielsweise substituierte Terephthal- und Isophthalsäuren wie 3-t-Butylisophthalsäure, mehrkernige Dicarbonsäuren, z. B. 4,4'- und 3,3'-Diphenyldicarbonsäure, 4,4'- und 3,3'-Diphenylmethandicarbonsäure, 4,4'- und 3,3'-Diphenylsulfondicarbonsäure, 1,4-oder 2,6-Naphtalindicarbonsäure und Phenoxyterephthalsäure.

Weitere polyamidbildende Monomere $a_5$) können sich von Dicarbonsäuren mit 4 bis 16 Kohlenstoffatomen und aliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure oder Sebacinsäure als Vertreter der aliphatischen Dicarbonsäuren, 1,4-Butandiamin, 1,5-Pentandiamin oder Piperazin, als Vertreter der Diamine und Caprolactam, Capryllactam, Önanthlactam, ω-Aminoundecansäure und Laurinlactam als Vertreter von Lactamen bzw. Aminocarbonsäuren genannt.

Weiterhin haben sich solche teilaromatischen Copolyamide als besonders vorteilhaft erwiesen, deren Triamingehalt weniger als 0,5, vorzugsweise weniger als 0,3 Gew.-% beträgt.

Nach den meisten bekannten Verfahren (vgl. US-A 4 603 166) hergestellte teilaromatische Copolyamide

weisen Triamingehalte auf, die über 0,5 Gew.-% liegen, was zu einer Verschlechterung der Produktqualität und zu Problemen bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Copolyamide mit niedrigem Triamingehalt weisen bei gleicher Lösungsviskosität niedrigere Schmelzviskositäten im Vergleich zu Produkten gleicher Zusammensetzung auf, die einen höheren Triamingehalt aufweisen. Dies verbessert sowohl die Verarbeitbarkeit als auch die Produkteigenschaften erheblich.

Die Schmelzpunkte der teilaromatischen Copolyamide liegen im Bereich von 290°C bis 340°C, bevorzugt von 292 bis 330°C, wobei dieser Schmelzpunkt mit einer hohen Glasübergangstemperatur von in der Regel mehr als 120°C, insbesondere mehr als 130°C (im trockenen Zustand) verbunden ist.

Bei den teilaromatischen Copolyamiden sollen erfindungsgemäß solche verstanden werden, die einen Kristallinitätsgrad > 30 %, bevorzugt > 35 %, und insbesondere > 40 % aufweisen.

Der Kristallinitätsgrad ist ein Maß für den Anteil an kristallinen Fragmenten im Copolyamid und wird durch Röntgenbeugung oder indirekt durch Messung von $\Delta H_{krist.}$ bestimmt.

Selbstverständlich können auch Mischungen der teilaromatischen Copolyamide umgesetzt werden, wobei das Mischungsverhältnis beliebig ist.

Geeignete Verfahren zur Herstellung der erfindungsgemäßen Copolyamide sind dem Fachmann bekannt.

Als bevorzugte Herstellweise sei der Batch-Prozeß (diskontinuierliche Herstellweise) genannt. Dabei wird die wäßrige Monomerenlösung innerhalb 0,5 bis 3 h in einem Autoklaven auf Temperaturen von 280 - 340°C erhitzt, wobei ein Druck von 10 - 50, insbesondere 15 - 40 bar erreicht wird, der durch Entspannen von überschüssigem Wasserdampf möglichst konstant bis zu 2 h gehalten wird. Anschließend entspannt man den Autoklaven bei konstanter Temperatur innerhalb eines Zeitraumes von 0,5 - 2 h, bis man einen Enddruck von 1 bis 5 bar erreicht hat. Anschließend wird die Polymerschmelze ausgetragen, abgekühlt und granuliert.

Ein anderes bevorzugtes Verfahren erfolgt in Anlehnung an die in den EP-A 129195 und 129 196 beschriebenen Verfahren.

Gemäß diesen Verfahren wird eine wäßrige Lösung der Monomeren $a_1$) bis $a_4$) sowie gegebenenfalls $a_5$) mit einem Monomerengehalt von 30 bis 70, vorzugsweise 40 bis 65 Gew.-% unter erhöhtem Druck (1 bis 10 bar) und unter gleichzeitiger Verdampfung von Wasser und Bildung eines Präpolymeren innerhalb von weniger als 60 s auf eine Temperatur von 280 bis 330°C erhitzt, anschließend werden Präpolymere und Dampf kontinuierlich getrennt, der Dampf rektifiziert und die mitgeführten Diamine zurückgeleitet. Schließlich wird das Präpolymer in eine Polykondensationszone geleitet und unter einem Überdruck von 1 bis 10 bar und einer Temperatur von 280 bis 330°C bei einer Verweilzeit von 5 - 30 min. polykondensiert. Es versteht sich von selbst, daß die Temperatur im Reaktor über dem bei dem jeweiligen Wasserdampf-Druck erforderlichen Schmelzpunkt des entstehenden Präpolymeren liegt.

Durch diese kurzen Verweilzeiten wird die Bildung von Triaminen weitgehend verhindert.

Das so erhaltene Polyamid-Präpolymere, das in der Regel eine Viskositätszahl von 40 bis 70 ml/g, bevorzugt von 40 bis 60 ml/g, gemessen an einer 0,5 gew.-%igen Lösung in 96 %iger Schwefelsäure bei 25°C, aufweist, wird kontinuierlich aus der Kondensationszone entnommen.

Nach einer bevorzugten Arbeitsweise leitet man das so erhaltene Polyamid-Präpolymere schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert.

In einer besonders bevorzugten Ausführungsform ist es auch möglich, die Komponenten B) und C) sowie gegebenenfalls D) bis F) schon in den Entgasungsextruder zum Präpolymeren der Komponente A) zu geben, wobei in diesem Fall der Entgasungsextruder üblicherweise mit geeigneten Mischelementen, wie Knetblöcken, ausgestattet ist. Anschließend wird ebenfalls als Strang extrudiert, gekühlt und granuliert.

Dieses Granulat wird in fester Phase unter Inertgas kontinuierlich oder diskontinuierlich bei einer Temperatur unterhalb des Schmelzpunktes, z.B. von 170 bis 240°C, bis zur gewünschten Viskosität kondensiert. Für die diskontinuierliche Festphasenkondensation können z.B. Taumeltrockner, für die kontinuierliche Festphasenkondensation mit heißem Inertgas durchströmte Temperrohre verwendet werden. Bevorzugt wird die kontinuierliche Festphasenkondensation, wobei als Inertgas Stickstoff oder insbesondere überhitzter Wasserdampf, vorteilhaft der am Kopf der Kolonne anfallende Wasserdampf, verwendet wird.

Die Viskositätszahl, gemessen an einer 0,5 gew.-%igen Lösung in 96 %iger Schwefelsäure bei 25°C, liegt nach der Nachkondensation in fester Phase oder den anderen vorstehend genannten Herstellverfahren im allgemeinen im Bereich von 100 bis 500 ml/g, vorzugsweise von 110 bis 200 ml/g.

Als Polymer (B) enthalten die erfindungsgemäßen Formmassen 5 bis 94, vorzugsweise 5 bis 60 und insbesondere 10 bis 50 Gew.-% eines nicht funktionalisierten ASA- oder ABS- oder SAN-Polymerisates oder eines Polymeren aus $C_1$ bis $C_{18}$ Alkylestern der (Meth)acrylsäure oder Mischungen derartiger Polymere.

Das Mischungsverhältnis der Polymeren ist über weite Grenzen variierbar; für den Fall der Mischung von

(Meth)acrylaten mit ASA, ABS oder SAN ist jedoch zu beachten, daß diese nur bis zu einem Acrylnitrilgehalt bis zu 27 Gew.-% (bis 250°C bezogen auf die Verarbeitungstemperatur), bis zu 25 Gew.-% (bis 300°C), bezogen auf den Gesamtgehalt an z.B. ABS, mischbar sind.

Bevorzugte ASA-Polymerisate sind aufgebaut aus einer Weich- oder Kautschukphase aus einem Pfropfpolymerisat aus:

$B_1$ 50 bis 90 Gew.-% einer Pfropfgrundlage auf Basis von

$B_{11}$ 95 bis 99,9 Gew.-% eines $C_2$-$C_{10}$-Alkylacrylats und

$B_{12}$ 0,1 bis 5 Gew.-% eines difunktionellen Monomeren mit zwei olefinischen, nicht konjugierten Doppelbindungen, und

$B_2$ 10 bis 50 Gew.-% einer Pfropfgrundlage aus

$B_{21}$ 20 bis 50 Gew.-% Styrol oder substituierten Styrolen der allgemeinen Formel I oder deren Mischungen, und

$B_{22}$ 10 bis 80 Gew.-% Acrylnitril, Methacrylnitril, Acrylsäureestern oder Methacrylsäureestern oder deren Mischungen,

in Mischung mit einer Hartmatrix auf Basis eines SAN-Copolymeren
$B_3$) aus:

$B_{31}$ 50 bis 90, vorzugsweise 55 bis 90 und insbesondere 65 bis 85 Gew.-% Styrol und/oder substituierten Styrolen der allgemeinen Formel I und

$B_{32}$ 10 bis 50, vorzugsweise 10 bis 45 und insbesondere 15 bis 35 Gew.-% Acrylnitril und/oder Methacrylnitril.

Bei der Komponente $B_1$) handelt es sich um ein Elastomeres, welches eine Glasübergangstemperatur von unter -20, insbesondere unter -30°C aufweist.

Für die Herstellung des Elastomeren werden als Hauptmonomere $B_{11}$) Ester der Acrylsäure mit 2 bis 10 C-Atomen, insbesondere 4 bis 8 C-Atomen eingesetzt. Als besonders bevorzugte Monomere seien hier tert.-, iso- und n-Butylacrylat sowie 2-Ethylhexylacrylat genannt, von denen die beiden letztgenannten besonders bevorzugt werden.

Neben diesen Estern der Acrylsäure werden 0,1 bis 5, insbesondere 1 bis 4 Gew.-%, bezogen auf das Gesamtgewicht $B_{11}$ + $B_{12}$ eines polyfunktionellen Monomeren mit mindestens zwei olefinischen, nicht konjugierten Doppelbindungen eingesetzt. Von diesen werden difunktionelle Verbindungen, d.h. mit zwei nicht konjugierten Doppelbindungen bevorzugt verwendet. Beispielsweise seien hier Divinylbenzol, Diallylfumarat, Diallylphthalat, Triallylcyanurat, Triallylisocyanurat, Tricyclodecenylacrylat und Dihydrodicyclopentadienylacrylat genannt, von denen die beiden letzten besonders bevorzugt werden.

Verfahren zur Herstellung der Pfropfgrundlage $B_1$ sind an sich bekannt und z.B. in der DE-B 1 260 135 beschrieben. Entsprechende Produkte sind auch kommerziell im Handel erhältlich.

Als besonders vorteilhaft hat sich in einigen Fällen die Herstellung durch Emulsionspolymerisation erwiesen.

Die genauen Polymerisationsbedingungen, insbesondere Art, Dosierung und Menge des Emulgators werden vorzugsweise so gewählt, daß der Latex des Acrylsäureesters, der zumindest teilweise vernetzt ist, eine mittlere Teilchengröße (Gewichtsmittel $d_{50}$) im Bereich von etwa 200 bis 700, insbesondere von 250 bis 600 nm aufweist. Vorzugsweise hat der Latex eine enge Teilchengrößenverteilung, d.h. der Quotient

$$Q = \frac{d_{90} - d_{10}}{d_{50}}$$

ist vorzugsweise kleiner als 0,5, insbesondere kleiner als 0,35.

Der Anteil der Pfropfgrundlage $B_1$ am Pfropfpolymerisat $B_1$+$B_2$ beträgt 50 bis 90, vorzugsweise 55 bis 85 und insbesondere 60 bis 80 Gew.-%, bezogen auf das Gesamtgewicht von $B_1$+$B_2$.

Auf die Pfropfgrundlage $B_1$ ist eine Pfropfhülle $B_2$ aufgepfropft, die durch Copolymerisation von

$B_{21}$ 20 bis 90, vorzugsweise 30 bis 90 und insbesondere 30 bis 80 Gew.-% Styrol oder substituierten Styrolen der allgemeinen Formel I

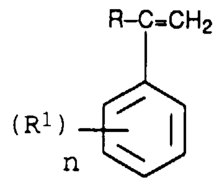

wobei R Alkylreste mit 1 bis 8 C-Atomen, Wasserstoffatome oder Halogenatome und $R^1$ Alkylreste mit 1 bis 8 C-Atomen oder Halogenatome darstellen und n den Wert 0, 1, 2 oder 3 hat, und

$B_{22}$ 10 bis 80, vorzugsweise 10 bis 70 und insbesondere 20 bis 70 Gew.-% Acrylnitril, Methacrylnitril, Acrylsäureestern oder Methacrylsäureestern oder deren Mischungen erhältlich ist.

Beispiele für substituierte Styrole sind α-Methylstyrol, p-Methylstyrol, p-Chlorstyrol und p-Chlor-α-Methylstyrol, wovon Styrol und α-Methylstyrol bevorzugt werden.

Bevorzugte Acryl- bzw. Methacrylsäureester sind solche, deren Homopolymere bzw. Copolymerisate mit den anderen Monomeren der Komponente $B_{22}$) Glasübergangstemperaturen von mehr als 20°C aufweisen; prinzipiell können jedoch auch andere Acrylsäureester eingesetzt werden, vorzugsweise in solchen Mengen, so daß sich insgesamt für die Komponente $B_2$ eine Glasübergangstemperatur $T_g$ oberhalb 20°C ergibt.

Besonders bevorzugt werden Ester der Acryl- oder Methacrylsäure mit $C_1$-$C_8$-Alkoholen und Epoxygruppen enthaltende Ester wie Glycidylacrylat bzw. Glycidylmethacrylat. Als ganz besonders bevorzugte Beispiele seien Methylmethacrylat, t-Butylmethacrylat, Glycidylmethacrylat und n-Butylacrylat genannt, wobei letzterer aufgrund seiner Eigenschaft, Polymerisate mit sehr niedriger $T_g$ zu bilden, vorzugsweise in nicht zu hohem Anteil eingesetzt wird.

Die Pfropfhülle $B_2$) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in der DE-PS 12 60 135, DE-OS 32 27 555, DE-OS 31 49 357 und DE-OS 34 14 118 beschrieben ist.

Je nach den gewählten Bedingungen entsteht bei der Pfropfmischpolymerisation ein bestimmter Anteil an freien Copolymerisaten von Styrol bzw. substituierten Styrolderivaten und (Meth)Acrylnitril bzw. (Meth)Acrylsäureestern.

Das Pfropfmischpolymerisat $B_1$ + $B_2$ weist im allgemeinen eine mittlere Teilchengröße von 100 bis 1.000 nm, im besonderen von 200 bis 700 nm, ($d_{50}$-Gewichtsmittelwert) auf. Die Bedingungen bei der Herstellung des Elastomeren $B_1$) und bei der Pfropfung werden daher vorzugsweise so gewählt, daß Teilchengrößen in diesem Bereich resultieren. Maßnahmen hierzu sind bekannt und z.B. in der DE-PS 1 260 135 und der DE-OS 28 26 925 sowie in Journal of Applied Polymer Science, Vol. 9 (1965), S. 2929 bis 2938 beschrieben. Die Teilchenvergrößerung des Latex des Elastomeren kann z.B. mittels Agglomeration bewerkstelligt werden.

Zum Pfropfpolymerisat ($B_1$+$B_2$) zählen im Rahmen dieser Erfindung auch die bei der Pfropfmischpolymerisation zur Herstellung der Komponente $B_2$) entstehenden freien, nicht gepfropften Homo- und Copolymerisate.

Nachstehend seien einige bevorzugte Pfropfpolymerisate angeführt:

1: 60 Gew.-% Pfropfgrundlage $B_1$ aus

$B_{11}$ 98 Gew.-% n-Butylacrylat und
$B_{12}$ 2 Gew.-% Dihydrodicyclopentadienylacrylat und
40 Gew.-% Pfropfhülle $B_2$ aus
$B_{21}$ 75 Gew.-% Styrol und
$B_{22}$ 25 Gew.-% Acrylnitril

2: Pfropfgrundlage wie bei 1 mit 5 Gew.-% einer ersten Pfropfhülle aus Styrol
und

35 Gew.-% einer zweiten Pfropfstufe aus
$B_{21}$ 75 Gew.-% Styrol und
$B_{22}$ 25 Gew.-% Acrylnitril

3: Pfropfgrundlage wie bei 1 mit 13 Gew.-% einer ersten Pfropfstufe aus Styrol und 27 Gew.-% einer zweiten Pfropfstufe aus Styrol und Acrylnitril im Gewichtsverhältnis 3:1

Die als Komponente $B_3$) enthaltenen Produkte können z.B. nach dem in den DE-AS 10 01 001 und DE-AS 10 03 436 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 50.000 bis 500.000, insbesondere von 100.000 bis 250.000.

Das Gewichtsverhältnis von ($B_1$ + $B_2$):$B_3$ liegt im Bereich von 1:2,5 bis 2,5:1, vorzugsweise von 1:2 bis 2:1 und insbesondere von 1:1,5 bis 1,5:1.

Geeignete SAN-Polymere als Komponente B) sind vorstehend (siehe $B_{31}$ und $B_{32}$) beschrieben.

Die Viskositätszahl der SAN-Polymerisate, gemessen gemäß DIN 53 727 als 0,5 gew.-%ige Lösung in Dimethylformamid bei 23°C liegt im allgemeinen im Bereich von 40 bis 100, vorzugsweise 50 bis 80 ml/g.

ABS-Polymere als Polymere (B) in den erfindungsgemäßen weisen den gleichen Aufbau wie vorstehend für ASA-Polymere beschrieben auf. Anstelle des Acrylatkautschukes $B_1$) der Pfropfgrundlage beim ASA-Polymer werden üblicherweise konjugierte Diene, eingesetzt, so daß sich für die Pfropfgrundlage $B_4$ vorzugsweise folgende Zusammensetzung ergibt:

$B_{41}$ 70 bis 100 Gew.-% eines konjugierten Diens und
$B_{42}$ 0 bis 30 Gew.-% eines difunktionellen Monomeren mit zwei olefinischen nicht-konjugierten Doppelbindungen

Als Beispiele für konjugierte Diene seien 1,3 Pentadien, alkyl-substituierte Diene wie 2,3-Dimethylbutadien oder konjugierte Hexadiene, Heptadiene sowie Octadiene und cyclische Diene wie Cyclopentadien genannt, wobei Butadien und Isopren bevorzugt sind.

Pfropfauflage $B_2$ und die Hartmatrix des SAN-Copolymeren $B_3$) bleiben in der Zusammensetzung unverändert. Derartige Produkte sind im Handel erhältlich. Die Herstellverfahren sind dem Fachmann bekannt, so daß sich weitere Angaben hierzu erübrigen.

Das Gewichtsverhältnis von ($B_4$ + $B_2$):$B_3$ liegt im Bereich von 3:1 bis 1:3, vorzugsweise von 2:1 bis 1:2.

Als Polymer (B) in den erfindungsgemäßen Formmassen kommt weiterhin ein Polymer aus einem $C_1$-$C_{18}$ Alkylester der (Meth)acrylsäure oder deren Mischungen in Betracht.

Als $C_1$-$C_{18}$-Alkylester der Acrylsäure verwendet man erfindungsgemäß die $C_1$-$C_{18}$-Alkylester wie Methyl-, Ethyl-, n-Propyl-, i-Propyl, n-Butyl-, i-Butyl-, sek.-Butyl-, tert.-Butyl-, Pentyl-, Hexyl-, Heptyl-, Octyl-, 2-Ethylhexyl-, Nonyl-, Decyl-, Lauryl- oder Stearylacrylat, bevorzugt Methylacrylat, n-Butylacrylat und 2-Ethylhexylacrylat, sowie Mischungen dieser Monomeren.

Als $C_1$-$C_{18}$-Alkylester der Methacrylsäure verwendet man erfindungsgemäß die $C_1$-$C_{18}$-Alkylester wie Methyl-, Ethyl-, n-Propyl-, i-Propyl, n-Butyl-, i-Butyl-, sek.-Butyl-, tert.-Butyl-, Pentyl-, Hexyl-, Heptyl-, Octyl-, 2-Ethylhexyl-, Nonyl-, Decyl-, Lauryl- oder Stearylmethacrylat, bevorzugt Methylmethacrylat, sowie Mischungen dieser Monomeren.

Als weitere Comonomere kann man bis zu 50 Gew.-%, bevorzugt von 1 bis 20 Gew.-%, der folgenden beispielhaft aufgeführten Monomeren einsetzen:

- Vinylaromaten wie Styrol, alpha-Methylstyrol, Vinyltoluol oder p-tert.-Butylstyrol;
- p-Aminostyrol;
- p-Hydroxystyrol;
- p-Vinylbenzoesäure
- Acryl- und Methacrylsäure;
- Acryl- und Methacrylamid;
- Maleinsäure sowie deren Imide und $C_1$-$C_{10}$-Alkylester;
- Fumarsäure sowie deren Imide und $C_1$-$C_{10}$-Alkylester;
- Itaconsäure sowie deren Imide und $C_1$-$C_{10}$-Alkylester;
- Acryl- und Methacrylnitril;
- Hydroxyalkyl(meth)acrylate.

Als besonders vorteilhaft haben sich Polymerisate aus 99 Gew.-% Methylmethacrylat und 1 Gew.-% Methylacrylat mit einem Molekulargewicht (Gewichtsmittelwert $M_w$) von 60.000 bis 300.000 g/mol, insbesondere von 80.000 bis 150.000 g/mol, erwiesen.

Polymethylmethacrylat stellt man in der Regel nach bekannten Polymerisationsverfahren wie Masse-, Lösungs-, Emulsions- oder Perlpolymerisation her. Solche Verfahren sind beispielsweise in Kunststoffhandbuch, Bd. 9, Vieweg und Esser; Polymethylmethacrylat, Carl-Hanser-Verlag, München, 1975, S. 36ff, beschrieben.

Als Komponente C) werden 1 bis 30, vorzugsweise 2 bis 20 und insbesondere 5 bis 10 Cew.-% modifizierte ABS-, SAN-, ASA oder Polymere auf (Meth)acrylatbasis als Haftvermittler eingesetzt, wie sie vorstehend bei Komponente B) bereits beschrieben werden, welche 0,1 bis 10, vorzugsweise 0,1 bis 1 Gew.-%, bezogen auf 100 Gew.-% C) an funktionellen Monomeren aufweisen. Bevorzugt werden modifizierte SAN-Polymere als Haftvermittler eingesetzt,

die als Komponente B) vorstehend beschrieben sind (siehe $B_{31}$ und $B_{32}$).

Durch den Haftvermittler, welcher mit funktionellen Monomeren modifiziert wird, wird die Phasenhaftung der beiden Polymere A) und B) weiter verbessert.

Üblicherweise wird ein unmodifiziertes ABS, SAN- oder ASA-Polymer oder (Meth)acrylatpolymer (siehe Komponente B) durch Einbau mindestens einer Carboxyl-, Carbonsäure-, Säureanhydrid-, Säureamid-, Säureimid, Carbonsäureester-, Carboxylat-, Amino-, Hydroxyl-, Epoxi-, Oxazolin-, Urethan-, Harnstoff-, Lactam-, Halogenbenzyl- oder l,2,4-Triazolin-3,5-dion-Gruppe (funktionelle Monomere) modifiziert.

Geeignete Modifizierungsmittel sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von $C_1$- und $C_2$- bis $C_8$-Alkanolen, die Mono- oder Diamide dieser Säuren wie N-Phenylmaleinimid, Maleinhydrazid. Weiterhin seien beispielsweise N-Vinylpyrrolidon und (Meth)acryloylcaprolactam genannt. Eine andere Gruppe von Modifiziermitteln umfaßt beispielsweise das Säurechlorid des Trimethsäureanhydrids, Benzol-1,2-dicarbonsäureanhydrid-4-carbonsäureessigsäureanhydrid, Chlorethanoylsuccinaldehyd, Chlorformylsuccinaldehyd, Zitronensäure und Hydroxysuccinsäure.

Besonders bevorzugtes Modifizierungsmittel ist 1,2,4-Triazolin-3,5-dion selbst oder in 4-Stellung substituierte 1,2,4-Triazolin-3,5-dione der Formel I

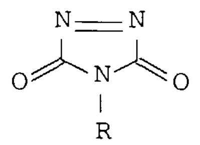

I.

Hierin kann R stehen für einen Alkyl-, Cycloalkyl-, Aryl-, Aralkyl- oder Alkylarylrest mit bis zu 25 C-Atomen, einen 5- bis 8-gliedrigen Heterocyclus mit Stickstoff, Sauerstoff oder Schwefel als Heteroatom oder für $NR^1R^2$, wobei $R^1$ und $R^2$ $C_1$- bis $C_4$-Alkylgruppen und insbesondere Wasserstoff sind.

Man kann die funktionellen Monomeren entweder durch Copolymerisation oder Pfropfung in die Polymerkette einführen. Die Pfropfung kann entweder in Lösung oder in der Schmelze erfolgen, wobei gegebenenfalls Radikalstarter wie Peroxide, Hydroperoxide, Perester und Percarbonate mitverwendet werden können.

Die erfindungsgemäßen Formmassen können 0 bis 30, vorzugsweise 0 bis 20 und insbesondere 0 bis 10 Gew.-% eines kautschukelastischen Polymerisats, welches nicht der für B) und C) angegebenen Definition entspricht, enthalten. Derartige Polymerisate werden oft auch als schlagzähmodifizierende Polymere, Schlagzähmodifier, Elastomere oder Kautschuke bezeichnet.

Die Komponente D) weist im allgemeinen mindestens eine Elastomerphase auf, deren Erweichungstemperatur unter -25, bevorzugt unter -30°C liegt.

Schlagzäh modifizierende Polymere, die die Zähigkeit der Komponente A) erhöhen, sind Copolymere des Ethylens mit Propylen sowie gegebenenfalls einem konjugierten Dien (EP- bzw. EPDM Kautschuke), wobei der Ethylengehalt bevorzugt 45 und insbesondere 50 Gew.-% (bezogen auf 100 Gew.-% der Komponente D)) beträgt.

Derartige Schlagzähmodifier sind allgemein bekannt, weshalb für weitere Einzelheiten hier auf die Publikation von Cartasegna in Kautschuk, Gummi, Kunststoffe 39, 1186-91 (1986) verwiesen sei.

Kautschuke, die die Zähigkeit von Polyamiden erhöhen, weisen i.a. zwei wesentliche Merkmale auf: sie enthalten einen elastomeren Anteil, der eine Glastemperatur von weniger als -10°C, vorzugsweise von weniger als -30°C aufweist und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke, die die Zähigkeit von Polyamiden erhöhen, seien z.B. folgende genannt:

EP- bzw. EPDM-Kautschuke, die mit den o.g. funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat. Diese Monomeren können in der Schmelze oder in Lösung, gegebenenfalls in Gegenwart eines Radikalstarters wie z.B. Cumolhydroperxoid auf das Polymere aufgepfropft werden.

Weiterhin seien Copolymere von α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl (meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-$\alpha$-Olefin hergestellt werden. Der Anteil des $\alpha$-Olefins an dem Copolymeren liegt i.a. im Bereich von 99,95 bis 55 Gew.-%.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglykolen und kurzkettige Segmente, die sich von niedermolekularen Diolen und Dicarbonsäuren ableiten, enthalten. Derartige Produkte sind an sich bekannt und in der Literatur, z.B. in der US-A 3 651 015, beschrieben. Auch im Handel sind entsprechende Produkte unter den Bezeichnungen Hytrel® (Du Pont), Arnitel® (Akzo und Pelprene® erhältlich.

Selbstverständlich könne auch Mischungen verschiedener Kautschuke eingesetzt werden.

Als weiteren Bestandteil können die erfindungsgemäßen Formmassen 0 bis 45, vorzugsweise bis 35 Gew.-% eines faser- oder teilchenförmigen Füllstoffes (Komponente (E)) oder deren Mischungen enthalten.

Bevorzugte faserförmige Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid (A) mit einer Schlichte und einem Haftvermittler ausgerüstet sein. Im allgemeinen haben die verwendeten Glasfasern einen Durchmesser im Bereich von 6 bis 20 $\mu$m.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe eignen sich amorphe Kieselsäure, Magnesiumcarbonat (Kreide), Kaolin (insbesondere kalzinierter Kaolin), gepulverter Quarz, Glimmer, Talkum, Feldspat und insbesondere Calciumsilikate wie Wollastonit.

Bevorzugte Kombinationen von Füllstoffen sind z.B. 20 Gew.% Glasfasern mit 15 Gew.% Wollastonit und 15 Gew.% Glasfasern mit 15 Gew.% Wollastonit.

Neben den wesentlichen Komponenten A) bis C) sowie gegebenenfalls D) und/oder E) können die erfindungsgemäßen Formmassen übliche Zusatzstoffe und Verarbeitungshilfsmittel F) enthalten. Deren Anteil beträgt im allgemeinen bis zu 30, vorzugsweise bis zu 15 Gew.%, bezogen auf das Gesamtgewicht der Komponenten (A) bis (F).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe und Pigmente und Weichmacher.

Pigmente und Farbstoffe sind allgemein in Mengen bis zu 4, bevorzugt 0,5 bis 3,5 und insbesondere 0,5 bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 $PbCO_3 \cdot Pb(OH)_2$), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz ($Fe_3O_4$), Spinellschwarz ($Cu(Cr,Fe)_2O_4$), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gas- ruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Die Halogenide, insbesondere des Kupfers, können auch noch elektronenreiche $\pi$-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Gleit- und Entformungsmittel, die in der Regel in Mengen bis zu 1 Gew.% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Zinns, Magnesiums, Mangans und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate.

Als Flammschutzmittel seien hier nur roter Phosphor und die anderen an sich für Polyamide bekannten Flammschutzmittel genannt.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion wird das Extrudat abgekühlt und zerkleinert.

Die erfindungsgemäßen Formmassen zeichnen sich durch eine gute multiaxiale Schlagzähigkeit in Kombination mit einer guten Bindenahtfestigkeit aus. Insbesondere lassen sie sich problemlos thermoplastisch verarbeiten und eignen sich demgemäß zur Herstellung von Fasern, Folien und Formkörpern, insbesondere Formkörper mit komplexen Geometrien.

Beispiele

Komponente A)

Eine ca. 60 %ige wäßrige Lösung, bestehend aus Terephthalsäure (32,2 mol-% ≙ 37,5 Gew.-%), Isophthalsäure (17,8 mol-% ≙ 20,6 Gew.-%), Hexamethylendiamin (48,1 mol-% ≙ 39,1 Gew.-% bzw. 1,9 mol-% ≙ 2,8 Gew.-%), Bis(4-aminocyclohexyl)methan und 0,174 kg Propionsäure sowie 100 kg Wasser wurde aus einem beheizten Vorratsbehälter bei ca. 80°C mit einer Geschwindigkeit entsprechend einer Polyamidmenge von 5 kg/Stunde mittels einer Dosierpumpe in eine teilweise horizontal, teilweise vertikal angeordneten Röhrenverdampfer befördert. Der Verdampfer war mit einem flüssigen Wärmeträger, der eine Temperatur von 326°C hatte, bei kräftiger Umwälzung beheizt. Der Verdampfer hatte eine Länge von 3 m und einen Inhalt von 180 ml und eine wärmeübertragende Oberfläche von etwa 1300 $cm^2$. Die Verweilzeit im Verdampfer betrug 50 sec. Das aus dem Verdampfer austretende Gemisch aus Präpolymeren und Wasserdampf hatte eine Temperatur von 310°C und wurde in einem Abscheider in Wasserdampf und Schmelze getrennt. Die Schmelze verweilte im Abscheider noch 10 Minuten und wurde dann mittels einer Austragsschnecke mit Ausdampfzone in Form von Strängen ausgetragen, in einem Wasserbad verfestigt und anschließend granuliert. Der Abscheider und die Verdampferzone wurden mittels einer Druckhalteeinrichtung, die nach der Kolonne angeordnet war, unter einem Druck von 5 bar gehalten. Der im Abscheider abgetrennte Wasserdampf wurde in eine Füllkörperkolonne mit ca. 10 theoretischen Böden geführt, in die am Kopf ca. 1 l Brüdenkondensat pro Stunde zur Erzeugung von Rücklauf aufgegeben wurden. Am Kolonnenkopf stellte sich eine Temperatur von 152°C ein. Der nach dem Entspannungsventil austretende Wasserdampf wurde kondensiert und hatte einen Gehalt an Hexamethylendiamin von weniger als 0,05 Gew.-%. Als Kolonnensumpf erhielt man eine wäßrige Lösung von Hexamethylendiamin, die 80 Gew.-% Hexamethylendiamin, jeweils bezogen auf erzeugtes Polyamid enthielt. Diese Lösung wurde über eine Pumpe wieder vor dem Eintritt in den Verdampfer der Ausgangssalzlösung zugegeben.

Nach Austritt der Polymerschmelze aus dem Abscheider hatte das Polyamid eine sehr helle Eigenfarbe und eine Viskositätszahl von 48 ml/g (gemessen als 0,5 %ige Lösung bei 25°C in 96 gew.-%iger $H_2SO_4$ gemäß DIN 53 246).

Das Produkt wies in etwa eine Äquivalenz von Carboxyl- und Aminoendgruppen auf.

Im Austragsextruder wurde die Schmelze auf Normaldruck entspannt und bei einer Verweilzeit von weniger als 1 Minute praktisch nicht mehr weiter kondensiert.

Anschließend wurde das Produkt in fester Phase in einem feststehenden Temperrohr (doppelwandiges, von außen mit Öl auf Temper-Temperatur beheiztes Glasrohr von 120 mm Innendurchmesser und 1000 mm Länge, das mit überhitztem Wasserdampf mit 120 1/min durchströmt ist) bei 200°C diskontinuierlich auf eine Viskositätszahl von 112 ml/g getempert. Die Verweilzeit betrug 23 h. Im Verlauf dieser Temperung wurde gegebenenfalls auch ein Großteil der extrahierbaren Restmonomere vom Wasserdampf extrahiert.

Zusammensetzung:

$a_1$) 32,2 mol-% bzw. 37,5 Gew.-%

$a_2$) 17,8 mol-% bzw. 20,6 Gew.-%
$a_3$) 48,1 mol-% bzw. 39,1 Gew.-%
$a_4$) 1,9 mol-% bzw. 2,8 Gew.-%

Als relatives Maß für den Kristallinitätsgrad wurde die spezifische Schmelzwärme $\Delta H_{krist.}$ mittels Differential Scanning Colorimetric (DSC 990 Firma Du Pont) bei 20°C/min Aufheizrate bestimmt: 54 J/g.

Komponente A/1V

Poly-ε-Caprolactam (Ultramid® B3 der BASF AG) mit einer VZ (Viskositätszahl) von: 150 ml/g; $\Delta H_{krist}$: 75 J/g.

Komponente B/1

Ein ABS-Polymer (Terluran® 967 K der BASF AG) erhältlich gemäß Beispiel 1 der DE-A 24 27 960:

In einem für 10 atü ausgelegten V2A-Stahlkessel mit Blattrührer wurden die folgenden Produkte vorgelegt:

| | |
|---|---|
| 150 | Teile Wasser, |
| 1,2 | Teile des Natriumsalzes einer Parafinsulfonsäure ($C_{12}$-$C_{18}$), |
| 0,3 | Teile Kaliumpersulfat, |
| 0,3 | Teile Natriumbicarbonat, |
| 0,15 | Teile Natriumpyrophosphat. |

Zur Entfernung des Sauerstoffs wurde der Kessel zweimal mit Stickstoff gespült und die Lösung auf 65°C erhitzt. Darauf wurden der Lösung 0,5 Teile tert.-Dodecylmercaptan und 16,6 Teile Butadien zugeführt. 1 Stunde nach Polymerisationsbeginn wurden weitere 83,3 Teile Butadien innerhalb von 5 Stunden zudosiert. 5 Stunden nach Beendigung der Butadien-Zugabe, d.h. nach insgesamt 11 Stunden, wurden nochmals 0,5 Teile tert.-Dodecylmercaptan zugegeben. Nach der Reaktionszeit von insgesamt 19 Stunden wurde bei einem Umsatz von 96 % eine Polybutadien-Emulsion mit einem Feststoffgehalt von 39,2 %, bezogen auf die Emulsion, erhalten. Die Polybutadien-Latex hatte eine Glastemperatur von etwa -80°C. Die mittels der Ultrazentrifuge bestimmte Teilchengrößenverteilung (integrale Massenverteilung) ist durch folgende Werte charakterisiert:

$d_{10}$-Wert 0,06 µm
$d_{50}$-Wert 0,08 µm
$d_{90}$-Wert 0,105 µm

255 Teile der Polybutadien-Emulsion wurde bei 65°C mit 74 Teilen Wasser verdünnt. Zur Agglomeration des Latex wurden 30 Teile einer wäßrigen Dispersion eines Ethylacrylat-Copolymeren zudosiert, das 96 Gew.-% Ethylacrylat und 4 Gew.-% Methylacrylamid einpolymerisiert enthielt. Der Feststoffgehalt dieser Dispersion betrug 10 Gew.-%, bezogen auf die Dispersion. Nach der Agglomeration wurde ein Polybutadien-Latex erhalten, in dem etwa 80 Zahlenprozent der Teilchen im nicht agglomerierten Zustand vorlagen. Die mit der Ultrazentrifuge gemessene Teilchengrößenverteilung (integrale Massenverteilung) des agglomerierten Polybutadien-Latex ist durch folgende Werte charakterisiert:

$d_{10}$-Wert 0,079 µm
$d_{50}$-Wert 0,238 µm
$d_{90}$-Wert 0,323 µm

Die so erhaltene Polybutadien-Emulsion wurde auf 70°C aufgeheizt und bei dieser Temperatur mit 0,13 Teilen Kaliumpersulfat (in Form einer 3-prozentigen wäßrigen Lösung), 0,02 Teilen tert.-Dodecylmercaptan und 11 Teile eines Gemisches von Styrol und Acrylnitril versetzt. Das Gewichtsverhältnis von Styrol zu Acrylnitril in diesem Gemisch betrug 7:3. 10 Minuten nach Beginn der Pfropfreaktion wurde innerhalb von 2 3/4 Stunden ein Gemisch aus weiteren 39 Teilen Styrol, 17 Teilen Acrylnitril und 0,1 Teilen tert.-Dodecylmercaptan zudosiert. Dabei stellt sich eine Reaktionstemperatur von 75°C ein. Nach Beendigung der Monomerenzugabe wurde die Reaktion noch 1 Stunde fortgesetzt und das entstandene Pfropfpolymerisat dann mittels einer Calciumchlorid-Lösung bei 95°C gefällt und abgesaugt. Die feuchten Krümel des gepfropften Polybutadiens wurden mittels eines Extruders in die Schmelze eines Styrol-Acrylnitril-Copolymeren eingearbeitet, das 65 Gew.-% Styrol und 35 Gew.-% Acrylnitril einpolymerisiert enthielt. Das gepfropfte Polybutadien wurde dabei mit dem Styrol-Acrylnitril-Copolymeren im Gewichtsverhältnis von 3:7 gemischt.

Komponente B/2

Ein ASA-Polymer (Luran® S 778T der BASF AG) erhältlich gemäß DE-A 12 60 135 (Vergleichsbeispiel 1a):
100 Teile Butylacrylat, 50 Teile Emulgator H (20 %ig), 3 Teile Kaliumpersulfat und 1480 Teile destilliertes Wasser wurden unter Rühren auf 60°C erwärmt. Nach dem Anspringen der Polymerisation wurden 880 Teile Butylacrylat und 20 Teile Butandioldiacrylat im Verlauf von ca. 1 Stunde zudosiert. Man polymerisiert 2 Stunden nach und erhielt eine ~ 40%ige Polymerisatdispersion (A).
465 Teile Styrol und 200 Teile Acrylnitril wurden in Gegenwart von 2500 Teilen der Dispersion (A), 2 Teile Kaliumpersulfat, 1,33 Teile Laurylperoxyd und 1005 Teile destilliertes Wasser unter Rühren bei 60°C polymerisiert. Man erhielt eine 40%ige Dispersion, aus der das Festprodukt durch Zusatz einer 0,5 %igen Calciumchloridlösung ausgefällt, mit Wasser gewaschen und getrocknet wurde.
1490 Teile des getrockneten Polymerisats wurden mit 2090 Teilen eines Copolymerisats aus 68 Teilen Styrol und 32 Teilen Acrylnitril bei ~ 220°C in einem Schneckenextruder gemischt.

Komponente C/1

Ein SAN-Copolmyer:

| | |
|---|---|
| 75 | Gew.-% Styrol |
| 24,5 | Gew.-% Acrylnitril |
| 0,5 | Gew.-% Maleinsäureanhydrid |
| VZ = 80 ml/g | (gemäß DIN 53 727 gemessen als 0,5%ige Lösung in DMF bei 23°C) |

Komponente C/2

Ein SAN-Copolymer:

| | |
|---|---|
| 75 | Gew.-% Styrol |
| 21 | Gew.-% Acrylnitril |
| 4 | Gew.-% Maleinsäureanhydrid |
| VZ = 78 ml/g | (gemäß DIN 53 727, siehe Komponente C/1) |

Komponente D

Ein Ethylen/n-Butylacrylat/Acrylsäure/Maleinsäureanhydrid-Copolymer im Verhältnis 60:35:4,8:0,2 Gew.-%.

Herstellung der Formmassen

Die in der Tabelle angegebenen Anteile der jeweiligen Komponenten wurden in einem Zweiwellenextruder der (ZSK 30, Werner & Pfleiderer) bei einer Temperatur von 325°C in üblicher Weise konfektioniert. Die Polymerschmelze wurde entgast, als Strang extrudiert, durch ein Wasserbad geleitet, granuliert und getrocknet. Das Granulat wurde anschließend bei 325°C zu Normprüfkörpern auf einer Spritzgußmaschine verarbeitet.

Materialprüfung:

1) Durchstoßarbeit (W) - DIN 53 443
3) Bindenahtfestigkeit ($\sigma_B$)

Die Bindenahtfestigkeit wurde an von den zwei Endpunkten her angespritzten Zugstäben (170 x 20 x 4 mm) bestimmt, indem ein Zugversuch nach ISO 527 durchgeführt wurde. Als Maß für die Bindenahtfestigkeit dient die ermittelte Bruchspannung $\sigma_B$.
Die Zusammensetzungen der Formmassen und die Ergebnisse der Messungen sind der Tabelle zu entnehmen.

Tabelle

| Beispiele | Komponente A [Gew.-%] | Komponente B [Gew.-%] | Komponente C [Gew.-%] | Komponente D [Gew.-%] | W [Nm] | $\delta_B$ [N/mm$^2$] |
|---|---|---|---|---|---|---|
| 1 | A/1 60 | B/1 30 | C/1 10 | - | 62 | 53 |
| 2 | A/1 60 | B/2 30 | C/1 10 | - | 56 | 51 |
| 3 | A/1 60 | B/1 35 | C/2 5 | - | 63 | 50 |
| 4 | A/1 60 | B/2 35 | C/2 5 | - | 59 | 48 |
| 5 | A/1 55 | B/1 35 | C/2 5 | D 5 | 69 | 45 |
| 1* | A/1V 60 | B/1 30 | C/1 10 | - | 45 | 29 |
| 2* | A/1V 55 | B/1 35 | C/2 5 | D 5 | 48 | 26 |

**Patentansprüche**

1. Thermoplastische Formmassen, enthaltend

   A) 5 bis 94 Gew.-% eines teilaromatischen, teilkristallinen Copolyamids, aufgebaut im wesentlichen aus

      $a_1$) 30 bis 44 mol-% Einheiten, welche sich von Terephthalsäure ableiten

      $a_2$) 6 bis 20 mol-% Einheiten, welche sich von Isophthalsäure ableiten

      $a_3$) 43 bis 49,5 mol-% Einheiten, welche sich von Hexamethylendiamin ableiten

      $a_4$) 0,5 bis 7 mol-% Einheiten, welche sich von aliphatischen cyclischen Diaminen mit 6 bis 30 C-Atomen ableiten,

   wobei die Molprozente der Komponenten $a_1$) bis $a_4$) zusammen 100 % ergeben und

   B) 5 bis 94 Gew.-% eines nicht funktionalisierten ASA- oder ABS- oder SAN-Polymeren oder Polymeren aus $C_1$ bis $C_{18}$-Alkylestern der (Meth)acrylsäure oder deren Mischungen

   C) 1 bis 30 Gew.-% eines Polymerisates aufgebaut auf Basis eines ASA- oder ABS- oder SAN-Polymeren oder Polymeren aus $C_1$ bis $C_{18}$ Alkylestern der (Meth)acrylsäure oder deren Mischungen, modifiziert durch Einbau eines Monomeren mit midestens einer Carboxyl-, Carbonsäure-, Säureanhydrid-, Säureamid-, Säureimid-, Carbonsäureester-, Carboxylat-, Amino-, Hydroxyl-, Epoxy-, Oxazolin-, Urethan-, Harnstoff-, Lactam-, Halogenbenzyl- oder 1,2,4-Triazolin-3,5-dion-Gruppe in Mengen von 0,1 bis 10 Gew.-%, bezogen auf 100 Gew.-% (C),

   D) 0 bis 30 Gew.-% eines kautschukelastischen Polymerisates, welches nicht der für B) und C) angegebenen Definition entspricht

   E) 0 bis 45 Gew.-% eines faser- oder teilchenförmigen Füllstoffes oder deren Mischungen

   F) 0 bis 30 Gew.-% üblicher Zusatzstoffe und Verarbeitungshilfsmittel,

   wobei sich die Prozentzahlen A) bis F) zu 100 % ergänzen.

2. Thermoplastische Formmassen nach Anspruch 1, enthaltend

   A) 10 bis 90 Gew.-%
   B) 5 bis 60 Gew.-%
   C) 2 bis 20 Gew.-%
   D) 0 bis 20 Gew.-%
   E) 0 bis 35 Gew.-%
   F) 0 bis 30 Gew.-%

3. Thermoplastische Formmassen nach den Ansprüchen 1 und 2, in denen das Copolyamid A) aufgebaut ist aus

   $a_1$) 32 bis 40 mol-%

   $a_2$) 10 bis 18 mol-%

   $a_3$) 46 bis 48,5 mol-%

   $a_4$) 0,5 bis 4 mol-%

4. Thermoplastische Formmassen nach den Ansprüchen 1 und 3, in denen das Copolyamid A) einen Triamingehalt von weniger als 0,5 Gew.-% aufweist.

**5.** Thermoplastische Formmassen nach den Ansprüchen 1 bis 4, in denen das aliphatische cyclische Diamin $a_4$)

Bis(4-aminocyclohexyl)methan oder
Bis(4-amino-3-methylcyclohexyl)methan

oder deren Mischungen ist.

**6.** Thermoplastische Formmassen nach den Ansprüchen 1 bis 5, in denen das Copolyamid A) einen Kristallinitätsgrad größer 30 % aufweist.

**7.** Verwendung der thermoplastischen Formmassen gemäß den Ansprüchen 1 bis 6 zur Herstellung von Fasern, Folien und Formkörpern.

**8.** Formkörper, erhältlich aus Formmassen gemäß den Ansprüchen 1 bis 6.

**Claims**

**1.** A thermoplastic molding material containing

A) from 5 to 94% by weight of a partly aromatic, semicrystalline copolyamide composed essentially of

$a_1$) from 30 to 44 mol% of units which are derived from terephthalic acid,

$a_2$) from 6 to 20 mol% of units which are derived from isophthalic acid,

$a_3$) from 43 to 49.5 mol% of units which are derived from hexamethylenediamine, and

$a_4$) from 0.5 to 7 mol% of units which are derived from aliphatic cyclic diamines of 6 to 30 carbon atoms,

the molar percentages of components $a_1$) to $a_4$) together giving 100%, and

B) from 5 to 94% by weight of a non-functionalized ASA or ABS or SAN polymer or of a polymer of $C_1$-$C_{18}$-alkyl esters of (meth)acrylic acid or of a mixture thereof,

C) from 1 to 30% by weight of a polymer based on ASA or ABS or SAN polymer or polymer of $C_1$ to $C_{18}$ alkyl esters of (meth)acrylic acid or a mixture thereof, modified by incorporation of a monomer having at least one carboxyl, carboxylic acid, anhydride, amide, imide, carboxylic ester, carboxylate, amino, hydroxyl, epoxy, oxazoline, urethane, urea, lactam, halobenzyl or 1,2,4-triazoline-3,5-dione group, in an amount of from 0.1 to 10% by weight, based on 100% by weight of (C),

D) from 0 to 30% by weight of an elastomeric polymer which does not correspond to the definition given for B) and C),

E) from 0 to 45% by weight of a fibrous or particulate filler or of a mixture thereof, and

F) from 0 to 30% by weight of conventional additives and processing assistants,

the percentages A) to F) summing to 100%.

**2.** A thermoplastic molding material as claimed in claim 1, containing:

from 10 to 90% by weight of A),
from 5 to 60% by weight of B),
from 2 to 20% by weight of C),
from 0 to 20% by weight of D),
from 0 to 35% by weight of E) and
from 0 to 30% by weight of F).

**3.** A thermoplastic molding material as claimed in claims 1 and 2, in which the copolyamide A) is composed of

from 32 to 40 mol% of $a_1$),

from 10 to 18 mol% of $a_2$),

from 46 to 48.5 mol% of $a_3$) and

from 0.5 to 4 mol% of $a_4$).

**4.** A thermoplastic molding material as claimed in claims 1 and 3, in which the copolyamide A) has a triamine content of less than 0.5% by weight.

**5.** A thermoplastic molding material as claimed in any of claims 1 to 4, in which the aliphatic cyclic diamine $a_4$) is

bis(4-aminocyclohexyl)methane or
bis(4-amino-3-methylcyclohexyl)methane

or a mixture thereof.

**6.** A thermoplastic molding material as claimed in any of claims 1 to 5, in which the copolyamide A) has a crystallinity greater than 30%.

**7.** Use of a thermoplastic molding material as claimed in any of claims 1 to 6 for the production of fibers, films and moldings.

**8.** A molding obtainable from a molding material as claimed in any of claims 1 to 6.

## Revendications

**1.** Compositions de polyamides thermoplastiques, contenant

A) de 5 à 94% en poids d'un copolyamide partiellement aromatique, partiellement cristallin, essentiellement constitué de

$a_1$) 30 à 44% molaires d'unités dérivées de l'acide téréphtalique,
$a_2$) 6 à 20% molaires d'unités dérivées de l'acide isophtalique,
$a_3$) 43 à 49,5% molaires d'unités dérivées de l'hexamétylène-diamine
$a_4$) 0,5 à 7% molaires d'unités dérivées de diamines aliphatiques cycliques comportant de 6 à 30 atomes de carbone,

les pourcentages molaires des composants $a_1$) à $a_4$) totalisant ensemble 100% et
B) 5 à 94% en poids d'un polymère ASA, ou ABS ou SAN non fonctionnalisé ou de polymères d'esters alkyliques en $C_1$ à $C_{18}$ de l'acide (méth)acrylique ou leurs mélanges,
C) 1 à 30% en poids d'un polymère constitué à base d'un polymère ASA ou ABS ou SAN ou de polymères d'esters alkyliques en $C_1$ à $C_{18}$ de l'acide (méth)acrylique ou leurs mélanges, modifiés par introduction d'un monomère comportant au moins un radical carboxyle, acide carboxylique, anhydride d'acide, amide d'acide, imide d'acide, ester carboxylique, carboxylate, amino, hydroxyle, époxy, oxazoline, uréthanne, urée, lactame, halogénobenzène ou 1,2,4-triazoline-3,5-dione à raison de 0,1 à 10% en poids, par rapport à 100% en poids de (C),
D) 0 à 30% en poids d'un polymère caoutchouteux élastique ne correspondant pas à la définition donnée pour B) et C)
E) 0 à 45% en poids d'une charge sous forme de fibres ou de particules, ou leurs mélanges,
F) 0 à 30% en poids d'autres additifs et adjuvants de traitement,

les pourcentages de A) à F) totalisant ensemble 100%.

**2.** Masses de moulage thermoplastiques selon la revendication 1, contenant

A) de 10 à 90% en poids
B) de 5 à 60% en poids
C) de 2 à 20% en poids
D) de 0 à 20% en poids
E) de 0 à 35% en poids
F) de 0 à 30% en poids.

**3.** Masses de moulage thermoplastiques selon les revendications 1 et 2, caractérisées en ce que le copolyamide A) est constitué de

$a_1$) 32 à 40% molaires
$a_2$) 10 à 18% molaires
$a_3$) 46 à 48,5% molaires
$a_4$) 0,5 à 4% molaires.

**4.** Masses de moulage thermoplastiques selon les revendications 1 et 3, caractérisées en ce que le copolyamide A) présente une teneur en triamine inférieure à 0,5% en poids.

**5.** Masses de moulage thermoplastiques selon les revendications 1 à 4, caractérisées en ce que la diamine cyclique aliphatique $a_4$) est

du bis(4-aminocyclohexyl)méthane ou
du bis(4-amino-3-méthylcyclohexyl)méthane

ou leurs mélanges.

**6.** Masses de moulage thermoplastiques selon les revendications 1 à 5, caractérisées en ce que la copolyamide A) présente un degré de cristallinité supérieur à 30%.

**7.** Utilisation des masses de moulage thermoplastiques selon les revendications 1 à 6 pour la production de fibres, feuilles et articles façonnés.

**8.** Articles façonnés que l'on peut obtenir à partir des masses de moulages selon les revendications 1 à 6.